# EUROPÄISCHE PATENTSCHRIFT

(11) **EP 3 507 660 B1**
(45) Veröffentlichungstag und Bekanntmachung des Hinweises auf die Patenterteilung: **24.11.2021**
(21) Anmeldenummer: 17761063.1
(22) Anmeldetag: 29.08.2017
(51) Int. Cl.: G05B 19/418, F03D 7/04

(54) **VERFAHREN ZUM ÜBERTRAGEN VON REGELSTELLGRÖSSEN VON EINEM REGLER, INSBESONDERE EINEM WINDPARKREGLER EINES WINDPARKS, AN EINHEITEN SOWIE EINE ZU REGELNDE EINHEIT UND EINEN REGLER**
METHOD FOR TRANSMITTING CONTROLLING CONTROL VARIABLES FROM A CONTROLLER, IN PARTICULAR A WIND FARM CONTROLLER OF A WIND FARM, TO UNITS, AS WELL AS A UNIT TO BE CONTROLLED AND A CONTROLLER
PROCÉDÉ DE TRANSMISSION DE GRANDEUR DE RÉGLAGE D'UN RÉGULATEUR, EN PARTICULIER D'UN RÉGULATEUR DE PARC ÉOLIEN, À DES UNITÉS AINSI QU'UNITÉ À RÉGULER ET RÉGULATEUR

(30) Priorität: 05.09.2016 DE 102016116573
(43) Veröffentlichungstag der Anmeldung: 10.07.2019
(73) Patentinhaber: Wobben Properties GmbH, 26607 Aurich (DE)
(72) Erfinder: GIERTZ, Helge, 26789 Leer (DE)
(74) Vertreter: Eisenführ Speiser
(86) Internationale Anmeldenummer: PCT/EP2017/071587
(87) Internationale Veröffentlichungsnummer: WO 2018/041796

(56) Entgegenhaltungen:
- EP-A1- 1 722 102
- EP-A1- 2 637 367
- EP-A2- 1 168 120
- WO-A1-2016/128005
- DE-A1-102010 056 456
- DE-A1-102014 016 664

## Beschreibung

Verfahren zum Übertragen von Regelstellgrößen von einem Regler, insbesondere einem Windparkregler eines Windparks, an Einheiten sowie eine zu regelnde Einheit und einen Regler

Die Erfindung betrifft die Datenkommunikation in oder mit einem Windpark, nämlich zwischen Einheiten, wie Windenergieanlagen, Energiespeichern oder Windparkreglern des Windparks, und einem Regler, wie Windparkreglern, SCADA-Systemen, Cluster-Reglern oder Reglern in Leitstellen von Betreibern.

Gemäß dem Stand der Technik ist bekannt, dass Windparks eine mehrstufige, zum Beispiel zweistufige, Regelstrecke aufweisen, wobei eine erste, nämlich eine übergeordnete, Reglerstufe durch einen Windparkregler bereitgestellt wird, der Stellgrößen, die auch Regelstellgrößen genannt werden, für einzelne Einheiten des Windparks, zum Beispiel die Windenergieanlagen des Windparks, ermittelt. Diese Stellgrößen werden dann in Reglern der einzelnen Einheiten als Führungsgröße oder Sollwerte betrachtet und dort einer zweiten, nämlich einer untergeordneten, Reglerstruktur zugeführt. Dokument DE 10 2014 016 664 offenbart eine derartige Kombination aus einem Windparkregler mit mehreren Windenergieanlagen, wobei Werte vom Windparkregler an die Windenergieanlagen übertragen werden.

Die vorliegende Erfindung bezieht sich beispielsweise auf den Windparkregler bzw. das Übertragen einer mit dem Windparkregler ermittelten Regelstellgröße an die Windenergieanlage. Somit betrifft die Erfindung in dem beispielhaften Fall die zuvor genannte übergeordnete Reglerstruktur, ist jedoch nicht auf diesen Fall beschränkt. Vielmehr wird vornehmlich die Datenkommunikation im Windpark zwischen Windparkregler und Windenergieanlage betrachtet, wobei die Erfindung auf die Datenkommunikation zwischen Cluster-Reglern für mehrere Windparkregler angewendet werden kann.

Beim zuvor genannten Beispiel bezieht der Windparkregler Ist-Werte über eine Rückführung von beispielsweise einem Messpunkt im Bereich eines Netzeinspeisepunkts des Windparks, der auch Netzknoten genannt wird. Das heißt am Netzknoten, an dem alle Einheiten des Windparks gemeinschaftlich Energie in ein Netz einspeisen, werden Werte, wie beispielsweise die Spannung, die Frequenz, die Wirkleistung und/oder die Blindleistung, die die Einheiten zur Verfügung stellen und die in ein Versorgungsnetz eingespeist werden, gemessen und als Ist-Wert bereitgestellt.

Dieser Ist-Wert wird dem Windparkregler zugeführt, der in Abhängigkeit einer ebenfalls bereitgestellten Führungsgröße Stellgrößen bzw. Regelstellgrößen für die einzelnen Einheiten bereitstellt. Die vom Windparkregler bereitgestellten Regelstellgrößen werden über eine Datenleitung, die aus Datensicherheitsgründen als elektrische Leitung ausgeführt ist, an die einzelnen Einheiten des Windparks übertragen. Aufgrund der physikalischen Eigenschaften dieser Datenleitungen ist eine Datenübertragungsrate jedoch begrenzt, so dass nur eine maximale Anzahl von Datenpaketen in einem bestimmten Zeitraum vom Windparkregler an die einzelnen Einheiten übertragen werden kann.

Da die Regelstellgrößen vom Windparkregler mit einer Aktualisierungsrate von wenigen Sekunden oder sogar unter einer Sekunde bereitgestellt werden, werden die Regelstellgrößen mit Datenpaketen ausgesendet, die als sogenannter Rundruf ausgebildet sind. Das heißt alle Einheiten des Windparks werden von dem Datenpaket angesprochen bzw. empfangen dieses Datenpaket und übernehmen entsprechend der Aktualisierungsrate die im Datenpaket enthaltene Regelstellgröße zur Aktualisierung der zuvor empfangenen Regelstellgröße.

Im Hinblick auf die immer strenger werdenden Anforderungen an einzuhaltende Parameter der in ein Netz einzuspeisenden Energie müssen jedoch neben den windparkspezifischen Störgrößen, die auf die Reglerstrecke des Windparkreglers, also auf Ebene des Windparks gesehen, Einfluss nehmen können, auch Störgrößen betrachtet werden, die für einzelne Einheiten einen individuellen Einfluss haben. Daher ist es wünschenswert Regelstellgrößen für jede einzelne Einheit vom Windparkregler zur Verfügung zu stellen und an die einzelnen Einheiten zu übertragen. Aufgrund der oben genannten Begrenzung der Datenübertragungsrate, insbesondere auch bei bereits bestehenden Windparks mit älterer Datenübertragungstechnik, ist jedoch das Übertragen von individuellen Regelstellgrößen an alle Einheiten mit der zuvor genannten gewünschten schnellen Aktualisierungsrate nicht möglich.

Es ist daher Aufgabe der vorliegenden Erfindung zumindest eines der genannten Probleme des Standes der Technik anzugehen. Insbesondere soll ein Bereitstellen von individuellen Regelstellgrößen für jede Einheit, zum Beispiel eines Windparks, mit einer geeigneten Aktualisierungsrate ermöglicht werden.

Das Deutsche Patent- und Markenamt hat in der Prioritätsanmeldung zu vorliegender Anmeldung den folgenden Stand der Technik recherchiert: WO 2016/128005 A1 und DE 10 2010 056 456 A1.

Hierzu betrifft die Erfindung ein Verfahren zum Übertragen von Regelstellgrößen von einem Regler, der vorzugsweise ein Windparkregler eines Windparks, ein SCADA-System, ein Cluster-Regler oder ein Regler in Leitstellen von Betreibern, nämlich Netz- und/oder Windparkbetreibern, ist, an Einheiten, vorzugsweise des Windparks. Diese Einheiten sind zum Beispiel Windenergieanlagen des Windparks. Ein weiteres Beispiel für Einheiten des Windparks sind Energiespeicher wie beispielsweise Akkumulatoren oder ein Windparkregler selbst, wenn dieser durch einen Cluster-Regler oder vom Netzbetreiber mit Regelstellgrößen im Sinne der Erfindung beaufschlagt werden soll.

Gemäß der Erfindung werden ein erster Regelstellgrößenanteil und ein zweiter Regelstellgrößenanteil in dem Regler ermittelt. Der erste Regelstellgrößenanteil wird in einem ersten Datenpaket ausgegeben und der zweite Regelstellgrößenanteil wird in einem zweiten Datenpaket ausgegeben. Von einer ersten Einheit wird dann das erste Datenpaket mit dem ersten Regelstellgrößenanteil empfangen. Ebenfalls wird von der ersten Einheit das zweite Datenpaket mit dem zweiten Regelstellgrößenanteil empfangen. In der Einheit wird dann eine Regelstellgröße aus dem ersten Regelstellgrößenanteil und dem zweiten Regelstellgrößenanteil gebildet. Außerdem weist gemäß der Erfindung das erste Datenpaket eine Empfängeradresse auf, die der ersten Einheit und mindestens einer weiteren Einheit zugewiesen ist. Das zweite Datenpaket weist eine Empfängeradresse auf, die zumindest der ersten Einheit zugewiesen ist.

Erfindungsgemäss werden somit zwei Anteile einer Regelstellgröße vom Regler separat in zwei Datenpaketen übertragen. Diese Anteile können später in der Einheit zur Regelstellgröße zusammengesetzt werden. Hierbei ist zumindest das erste Datenpaket, das einen ersten Regelstellgrößenanteil aufweist derart mit einer Empfängeradresse adressiert, so dass dieses erste Datenpaket von mehr als einer Einheit empfangen wird. Demnach wird mit dem ersten Datenpaket ein Regelstellgrößenanteil ausgesendet, der allgemein für mehrere oder alle Einheiten bei der Regelung zum Zeitpunkt der Aussendung gültig ist. Demgegenüber enthält das zweite Datenpaket einen Regelstellgrößenanteil, der individuell für eine spezielle, hier die erste, Einheit festgelegt ist und demnach auch nur von der speziellen Einheit empfangen wird.

Erfindungsgemäss werden erste Datenpakete mit dem ersten Regelstellgrößenanteil häufiger versendet als zweite Datenpakete mit dem zweiten Regelstellgrößenanteil, so dass weiterhin eine Aktualisierungsrate des Regelstellgrößenanteils der einzelnen Einheiten mit einer gewünschten hohen Frequenz erfolgen kann. Demgegenüber können die für die Einheiten vorgesehenen zweiten Regelstellgrößenanteile, die individuell für jede einzelne Einheit festgelegt werden, mit einer geringeren Aktualisierungsrate ausgesendet werden.

Hierdurch ergibt sich außerdem der Vorteil, dass individuelle Regelstellgrößenanteile mit einer geringeren Frequenz als global geltende Regelstellgrößenanteile berechnet oder ermittelt werden müssen. Insbesondere, weil eine Ermittlung von individuellen Regelstellgrößenanteilen auch teilweise rechenintensiver als die Ermittlung von globalen Regelstellgrößenanteilen ist, kann somit auch eine hohe Aktualisierungsrate der Regelstellgröße erfolgen, ohne dass eine wesentlich erhöhte Rechenleistung im Regler zum zusätzlichen Bereitstellen von individuellen Regelstellgrößenanteilen benötigt wird.

Gemäß einer ersten Ausführungsform werden der erste Regelstellgrößenanteil und der zweite Regelstellgrößenanteil in einem Speicher der ersten Einheit gespeichert. Nach dem Empfangen eines weiteren Datenpakets mit einem weiteren ersten Regelstellgrößenanteil wird dann die Regelstellgröße in der ersten Einheit aus dem weiteren ersten Regelstellgrößenanteil und dem gespeicherten zweiten Regelstellgrößenanteil gebildet. Gleichzeitig oder danach wird der weitere erste Regelstellgrößenanteil im Speicher gespeichert und damit der zuvor gespeicherte erste Regelstellgrößenanteil vorzugsweise überschrieben.

Im Falle, dass ein weiteres Datenpaket mit einem weiteren zweiten Regelstellgrößenanteil von der ersten Einheit empfangen wird, wird die Regelstellgröße der ersten Einheit aus dem gespeicherten ersten Regelstellgrößenanteil und dem weiteren zweiten Regelstellgrößenanteil bestimmt. Auch in diesem Fall wird der weitere zweite Regelstellgrößenanteil entweder gleichzeitig oder nach dem Bilden der Regelstellgröße im Speicher gespeichert. Vorzugsweise wird der zuvor gespeicherte zweite Regelstellgrößenanteil vom weiteren zweiten Regelstellgrößenanteil überschrieben.

Durch Speichern des ersten und zweiten Regelstellgrößenanteils im Speicher wird sichergestellt, dass zu jedem Zeitpunkt, in dem ein weiterer Regelstellgrößenanteil von der ersten Einheit empfangen wird, eine Regelstellgröße bestimmt werden kann, da der entsprechend andere Regelstellgrößenanteil, der gerade nicht empfangen wurde, bereits im Speicher hinterlegt ist.

Gemäß einer weiteren Ausführungsform wird das erste Datenpaket zyklisch, also intervallweise, oder ereignisbasiert ausgesendet und/oder das zweite Datenpaket zyklisch oder ereignisbasiert ausgesendet.

Gemäß einer weiteren Ausführungsform entspricht der erste Regelstellgrößenanteil einem absoluten oder prozentualen Wert. Auch der zweite Regelstellgrößenanteil entspricht einem absoluten oder prozentualen Wert. Die Regelstellgröße wird dann in der Einheit durch aufaddieren des ersten Regelstellgrößenanteils und des zweiten Regelstellgrößenanteils bestimmt. Eine Alternative dieses Ausführungsbeispiels sieht ein Multiplizieren des ersten und zweiten Regelstellgrößenanteils vor. Bei dieser Alternative entspricht der erste Regelgrößenanteil einem absoluten oder prozentualen Wert und der zweite Regelgrößenanteil einem Faktor. Dementsprechend wird also die Regelstellgröße in der ersten Einheit durch Multiplizieren des ersten Regelstellgrößenanteils und des zweiten Regelstellgrößenanteils bestimmt.

Eine schnelle Datenverarbeitung zur Bestimmung der Regelstellgröße in der ersten Einheit ist somit möglich. Es kann also ohne aufwändige Umrechnungen des ersten Regelstellgrößenanteils und des zweiten Regelstellgrößenanteils direkt eine Regelstellgröße durch einfaches Aufaddieren oder Multiplizieren erfolgen.

Gemäß einer weiteren Ausführungsform kann die Regelstellgröße einen minimalen und einen maximalen Wert annehmen. Die erste Regelstellgröße weist gemäß dieser Ausführungsform einen Wert zwischen 0 und 100% der Differenz zwischen dem minimalen und maximalen Wert auf. Der zweite Regelstellgrößenanteil weist einen Wert zwischen -100% und 100% der Differenz zwischen dem minimalen und maximalen Wert auf.

Hierdurch ist es möglich, eine Regelstellgröße durch Übertragen eines ersten Regelstellgrößenanteils und eines zweiten Regelstellgrößenanteils zu bilden, die den minimalen Wert aufweist, selbst wenn beispielsweise der erste Regelstellgrößenanteil einen Wert aufweist, der größer als der minimale Wert ist. Dies erfolgt durch den zweiten Regelstellgrößenanteil, der gemäß der Ausführungsform negativ sein und, beispielsweise im Falle des Aufaddierens der beiden Regelstellgrößenanteile zum Erhalten der Regelstellgröße, den Wert des ersten Regelstellgrößenanteils kompensieren kann.

Gemäß einer weiteren Ausführungsform wird der erste Regelstellgrößenanteil in Abhängigkeit von globalen, zum Beispiel windparkspezifischen, Parametern für mehrere oder alle Einheiten gebildet. Das heißt, der erste Regelstellgrößenanteil wird im Regler in Abhängigkeit von Parametern ermittelt, die eine Störgröße auf die Regelstrecken aller der Einheiten darstellen, die also für alle Einheiten im Wesentlichen gleich groß ist. Veränderungen der hier angesprochenen Parameter haben somit Auswirkungen auf alle Einheiten in im Wesentlichen gleichem Maße.

Der zweite Regelstellgrößenanteil wird gemäß dieser Ausführungsform in Abhängigkeit von einheitenspezifischen Parametern im Regler ermittelt. Einheitenspezifische Parameter beschreiben damit Parameter, die als Störgröße einen besonderen Einfluss auf eine einzelne Einheit haben. Im Falle, dass sich also ein einheitenspezifischer Parameter ändert, hat dieser im Wesentlichen einen Einfluss auf eine einzelne Einheit und muss dementsprechend beim Ermitteln der Regelstellgröße dieser Einheit, auf die der einheitenspezifische Parameter Einfluss hat, bereitgestellt werden.

Gemäß einer speziellen Ausführungsform wird der erste Regelstellgrößenanteil in Abhängigkeit einer Führungsgröße bestimmt, die vom Betreiber, nämlich zum Beispiel dem Windparkbetreiber und/oder dem Netzbetreiber, vorgegeben wird. Dem Regler wird demnach eine Führungsgröße vom Betreiber vorgegeben, die auch der Betreiber ändern kann. Derartige Führungsgrößen sind zum Beispiel bestimmte Leistungsvorgaben, wie zum Beispiel eine Sollblindleistung oder eine Sollwirkleistung, die zum Beispiel vom Windpark in ein angeschlossenes Netz eingespeist werden soll.

Abhängig vom Energiebedarf, der sich in den Tageszeiten wiederspiegelt, ist demnach beispielsweise in der Nacht eine geringere Menge an elektrischer Energie in ein Netz einzuspeisen als am Tage. Demnach wird vom Betreiber eine Führungsgröße vorgegeben, um diese Variationen zu steuern. Diese Führungsgröße hat demnach Einfluss auf alle Einheiten zum Beispiel eines Windparks oder Clusters, also mehrere Windparks oder mehrere Energieerzeuger, die zu einem Cluster zusammengeschlossen sind. Dementsprechend muss die Führungsgröße bei der Bereitstellung einer Regelstellgröße einer Einheit für alle Einheiten gleichermaßen berücksichtigt werden. Demnach muss auch der erste Regelstel-Igrößenanteil, der an mehrere oder alle Einheiten zum Beispiel eines Windparks oder eines Clusters übertragen wird, von mehreren oder allen Einheiten mit dem ersten Datenpaket empfangen wird und von der Führungsgröße des Betreibers abhängig ist, bei der Berechnung der Regelstellgröße in jeder der jeweiligen Einheiten Berücksichtigung finden.

Gemäß einer weiteren Ausführungsform wird der zweite Regelstellgrößenanteil für mindestens eine bestimmte Einheit in Abhängigkeit einer Führungsgröße bestimmt, die mit für den Standort der bestimmten Einheit spezifischen Parametern bestimmt wird. In Abhängigkeit des Standorts einer Einheit haben demnach spezifische Parameter, nämlich für diesen Standort spezifische Parameter, einen Einfluss auf die Regelstrecke einer an dem Standort betriebenen Einheit. Da diese spezifischen Parameter nur bestimmte Auswirkungen für die bestimmte Einheit an dem entsprechenden Standort haben, dürfen diese Parameter beim Bereitstellen einer Regelstellgröße für andere Einheiten nicht berücksichtigt werden. Somit wird also nur der zweite Regelstellgrößenanteil für die bestimmte Einheit, also für mehrere bestimmte Einheiten jeweils einzeln, bestimmt.

Spezifische Parameter sind beispielsweise die Position der Einheit innerhalb des Windparks oder die Länge der elektrischen Leitung von der Einheit zu einem Einspeiseknoten oder Transformator des Windparks. Die Position der Einheit, im Falle, dass die Einheit eine Windenergieanlage ist, innerhalb des Windparks muss beispielsweise bei verschiedenen Windrichtungen berücksichtigt werden. Ein Windpark bezeichnet üblicherweise einen Verbund von mehreren Windenergieanlagen, die in örtlicher Nähe beieinander positioniert sind. Hierbei werden Windenergieanlagen beispielsweise in Reihen nebeneinander oder hintereinander aufgestellt. Im Falle, dass beispielsweise eine Windrichtung vorherrscht, die den Wind aus einer bestimmten Seite auf den Windpark eintreffen lässt, so sind die Windenergieanlagen in der zweiten Reihe aus dieser Windrichtung gesehen, durch die Windenergieanlagen in der ersten Reihe verschattet. Zur Steigerung des Energieertrags des Windparks ist es daher vorteilhaft, die Windenergieanlagen in der ersten Reihe mit einer geringeren Drehzahl als die Anlagen der dahinter liegenden Reihen zu betreiben, um diese Verschattungseffekte zu minimieren. Demnach werden also Führungsgrößen beispielsweise in Abhängigkeit der Windrichtung und dem Standort der bestimmten Einheit für jeden Standort der Einheit unterschiedlich ermittelt und somit im zweiten Regelstellgrößenanteil berücksichtigt.

Weitere Parameter sind beispielsweise das Aufstellungsdatum und die damit verbundene Vergütungshöhe der eingespeisten Energie einer Windenergieanlage. Insbesondere durch Windparkerweiterungen werden nämlich häufig im gleichen Windpark Windenergieanlagen betrieben, deren Energie unterschiedlich vergütet wird. Hierbei ist es - aus Sicht des Parkbetreibers - sinnvoll, besser vergüteten Windenergieanlagen - wenn nicht ohnehin bereits eine maximale Energieleistung des Parks eingespeist wird - anteilsmäßig mehr Energie einspeisen zu lassen als Windenergieanlagen, deren Energie verhältnismäßig schlechter vergütet wird.

Gemäß einer weiteren Ausführungsform ist die Regelstellgröße und dementsprechend vorzugsweise auch der erste und der zweite Regelstellgrößenanteil eine Leistungsstellgröße, nämlich eine Wirkleistungsstellgröße oder eine Blindleistungsstellgröße, eine Spannungsstellgröße oder eine Frequenzstellgröße.

Außerdem betrifft die Erfindung einen Regler, zum Beispiel einen Windparkregler für einen Windpark, einen Cluster-Regler oder einen Regler eines Betreibers, zum Ausführen eines Verfahrens nach einer der zuvor genannten Ausführungsformen. Der Regler umfasst eine Reglerrechnereinheit zum Ermitteln eines ersten Regelstellgrößenanteils und eines zweiten Regelstellgrößenanteils. Außerdem umfasst der Regler mindestens einen Datenanschluss zum Anschließen mindestens einer Datenverbindung mit Einheiten, insbesondere Windenergieanlagen oder Energiespeichern zum Beispiel eines Windparks. Ferner dient der Datenanschluss zum Übertragen des ersten Regelstellgrößenanteils in einem ersten Datenpaket und zum Übertragen des zweiten Regelstellgrößenanteils in einem zweiten Datenpaket. Hierbei ist der Regler eingerichtet, dem ersten Datenpaket eine Empfängeradresse zuzuweisen, die einer ersten Einheit und mindestens einer weiteren Einheit zugewiesen ist. Außerdem ist der Regler eingerichtet, dem zweiten Datenpaket eine Empfängeradresse zuzuweisen, die zumindest der ersten Einheit zugewiesen ist.

Gemäß einer Ausführungsform des Reglers umfasst dieser einen Dateneingang zum Empfangen von Führungsgrößen, die von einem Windparkbetreiber und/oder einem Netzbetreiber vorgegeben werden und Berücksichtigung bei der Ermittlung des ersten Regelstel-Igrößenanteils und/oder des zweiten Regelstellgrößenanteils finden.

Außerdem ist im Regler gemäß einer weiteren Ausführungsform ein Speicher für einheitenspezifische Parameter vorhanden. Der Speicher umfasst demnach einheitenspezifische Parameter wie den Standort jeder einzelnen Einheit oder die Länge der elektrischen Leitung von jeder der Einheiten zu einem Einspeiseknoten zum Beispiel des Windparks. Somit können Führungsgrößen in Abhängigkeit der hinterlegten einheitenspezifischen Parameter zur Bestimmung des zweiten Regelstellgrößenanteils berücksichtigt werden.

Gemäß einer weiteren Ausführungsform umfasst der Regler einen oder mehrere Sensoreingänge, die mit Umweltsensoren, wie beispielsweise Anemometern verbindbar sind. Bei der Bestimmung der Regelstellgrößenanteile können somit variable Werte von Umweltparametern ermittelt werden.

Ferner umfasst die Erfindung eine Einheit, zum Beispiel eine Windenergieanlage für einen Windpark, einen Cluster-Regler oder einen Batteriecontainer, zum Ausführen eines Verfahrens nach einer der zuvor genannten Ausführungsformen. Die Einheit umfasst einen Dateneingang zum Empfangen eines ersten Datenpakets mit einem ersten Regelstellgrößenanteil und zum Empfangen eines zweiten Datenpakets mit einem zweiten Regelstellgrößenanteil. Ferner weist die Einheit eine Einheitenrechnereinheit auf, die dient, um eine Regelstellgröße aus dem ersten Regelstellgrößenanteil und dem zweiten Regelstellgrößenanteil zu bilden.

Gemäß einer Ausführungsform umfasst die Einheitenrechnereinheit einen Speicher zum Speichern des ersten Regelstellgrößenanteils und des zweiten Regelstellgrößenanteils. Außerdem ist die Einheitenrechnereinheit eingerichtet, um den ersten Regelstellgrößenanteil und den zweiten Regelstellgrößenanteil zu addieren oder den ersten Regelstellgrößenanteil mit dem zweiten Regelstellgrößenanteil zu multiplizieren.

Ferner umfasst die Erfindung einen Windpark mit einem Regler, nämlich einem Windparkregler, gemäß einer der zuvor genannten Ausführungsformen und mehrere Einheiten, nämlich Windenergieanlagen, gemäß mindestens einer der zuvor genannten Ausführungsformen.

Weitere Ausführungsformen der Erfindung ergeben sich anhand der im Folgenden näher erläuterten Ausführungsbeispiele. In den Figuren zeigt
- Fig. 1: eine Windenergieanlage,
- Fig. 2: einen Windpark,
- Fig. 3: eine vergrößerte Darstellung eines Windparkreglers und dessen Verbindung mit Windenergieanlagen und
- Fig. 4: ein Ausführungsbeispiel des Verfahrens.

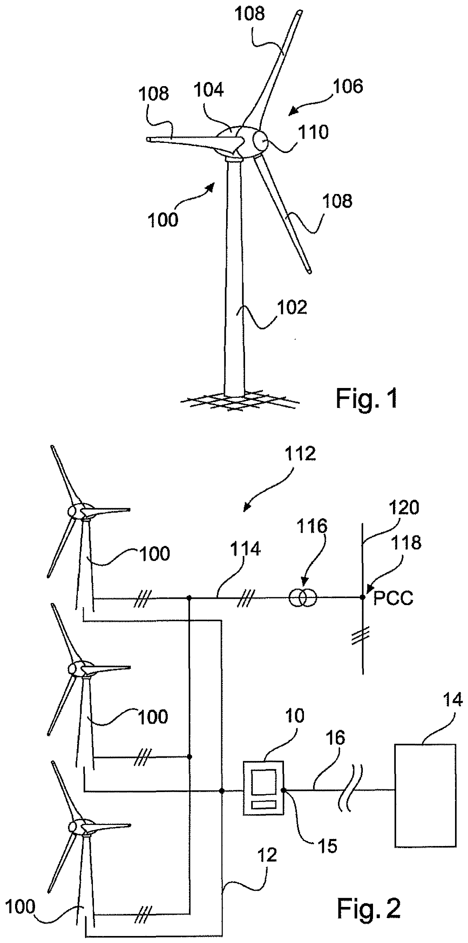

Fig. 1 zeigt eine schematische Darstellung einer Einheit 100, nämlich einer Windenergieanlage 100, eines Windparks 112. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park 112 hochtransformiert, um dann an dem Einspeisepunkt 118, der auch allgemein als PCC, Netzknoten oder Netzeinspeiseknoten bezeichnet wird, in das Versorgungsnetz 120 einzuspeisen. Fig. 2 ist nur eine vereinfachte Darstellung eines Windparks 112. Auch kann beispielsweise das Parknetz 114 anders gestaltet sein, in dem beispielsweise auch ein Transformator 116 am Ausgang jeder Windenergieanlage 100 vorhanden ist, um nur ein anderes Ausführungsbeispiel zu nennen.

Ferner zeigt Fig. 2 einen Regler 10, der hier ein Windparkregler 10 ist, der über ein Bussystem 12 mit jeder einzelnen Windenergieanlage 100 verbunden ist. Außerdem weist Fig. 2 eine Leitzentrale 14 eines Betreibers, nämlich eine Netzbetreibers oder eines Parkbetreibers, auf. Im vorliegenden Ausführungsbeispiel wird die Datenübertragung zwischen Windparkreglern 10 und Windenergieanlagen 100 im Detail betrachtet. Daher ist die Leitzentrale 14 bei diesem konkreten Beispiel nicht als Regler 10 beschrieben. Das Ausführungsbeispiel könnte jedoch auch durch die Betrachtung der Datenübertragung zwischen Betreiber und Windparkregler 10 erweitert werden, sodass dann die Leitzentrale als Regler und der Windparkregler als Einheit betrachtet werden könnte. Die Leitzentrale 14 ist mit einem Dateneingang 15 des Windparkreglers 10 über eine Verbindung 16 verbunden. Die Verbindung 16 entspricht zum Beispiel einer TCP/IP-Verbindung.

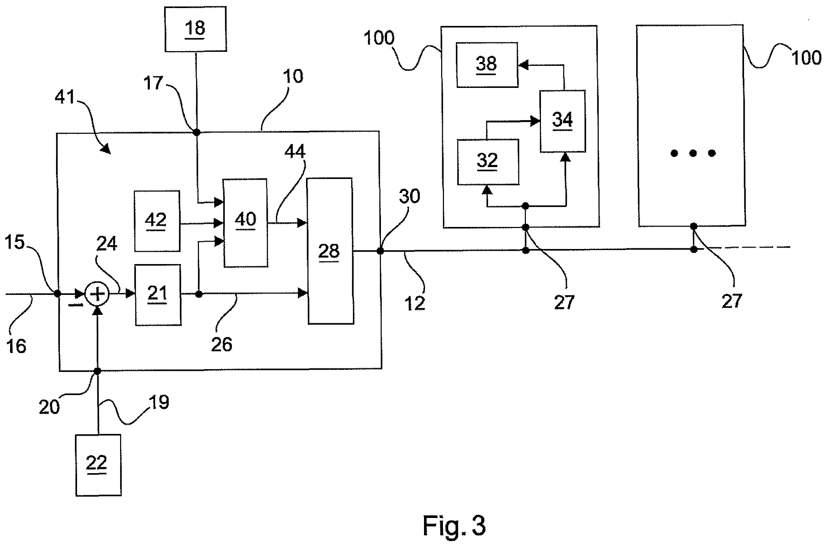

Fig. 3 zeigt den Windparkregler 10 in vergrößerter Darstellung. Der Windparkregler 10 umfasst einen Dateneingang 15, mit dem der Windparkregler 10 mit der Leitzentrale 14 eines Betreibers verbunden ist. Außerdem umfasst der Windparkregler 10 einen Dateneingang 17, mit dem mindestens ein Sensor 18 verbunden ist. Der Sensor 18 ist ein Umweltsensor. Der Sensor 18 dient beispielsweise zum Ermitteln der vorherrschenden Windrichtung und Windgeschwindigkeit im Bereich des Windparks 112.

Ferner weist der Windparkregler 10 einen weiteren Dateneingang 20 auf, an den eine Rückführung 19 des Regelkreises, der mit einem Regler 21 des Windparkreglers 10 geregelt wird, zugeführt wird. Die Rückführung 19 ist mit einer Messstelle 22, die im Bereich des Einspeisepunkts 118 angeordnet ist und elektrische Größen des Parknetzes 114 misst, verbunden. Diese elektrischen Größen sind zum Beispiel die Spannung und/oder die Frequenz des elektrischen Stroms bzw. der elektrischen Spannung im Parknetz 114. Eine Regelabweichung 24 wird im Windparkregler 10 durch Zuführen der Rückführung 19 über den Dateneingang 20 und eine vom Betreiber über den Dateneingang 15 vorgegebene Führungsgröße bestimmt. Die Regelabweichung 24 wird dem Regler 21 zugeführt, der eine Stellgröße für die Einheiten 100 des Windparks 112 bestimmt.

Erfindungsgemäß wird die Stellgröße als erster Regelstellgrößenanteil 26 bezeichnet. Der erste Regelstellgrößenanteil 26 wird einer Kommunikationsschnittstelle 28 zugeführt, die den ersten Regelstellgrößenanteil 26 zusammen mit einer Empfängeradresse in einem Datenpaket zusammenfasst. Das Datenpaket wird dann über einen Datenausgang 30 auf das Bussystem 12, das auch Datenbus genannt werden kann, ausgegeben. Die Empfängeradresse ist hierbei so von der Kommunikationsschnittstelle 28 gewählt, dass das Datenpaket von allen Einheiten 100 im Windpark 112 jeweils über ihren Dateineingang 27 empfangen wird.

Das heißt, jede der Windenergieanlagen 100 entnimmt den ersten Regelstellgrößenanteil 26 dem ersten Datenpaket und hinterlegt diesen einerseits in einem Speicher 32. Andererseits wird der erste Regelstellgrößenanteil 26 einer Windenergieanlagenrechnereinheit 34 zugeführt, die aus dem ersten Regelstellgrößenanteil 26 eine Regelstellgröße 78 für einen Windenergieanlagenregler 38 bestimmt. Die Regelstellgröße 78 ist damit aus Sicht des Windparkreglers 10 zwar eine Stellgröße, entspricht aber gleichzeitig einer Sollgröße aus Sicht der Windenergieanlagenregelung.

Der erste Regelstellgrößenanteil 26 wird im Windparkregler 10 zusätzlich einer Ermittlungseinheit 40, die auch ein weiterer Regler sein kann, dem ebenfalls die Rückführung 19 zugeführt wird, zugeführt. Der Ermittlungseinheit 40 werden ferner die Werte der Sensoren 18 zugeführt und die Ermittlungseinheit 40 kann auf einen Speicher 42 des Windparkreglers 10 zugreifen. Im Speicher 42 sind für den Standort der einzelnen Windenergieanlagen 100 spezifische Parameter, wie zum Beispiel die Positionen der Windenergieanlage 100 innerhalb des Windparks 112, hinterlegt.

In der Ermittlungseinheit 40 werden dann basierend auf dem ersten Regelstellgrößenanteil 26, den spezifischen im Speicher 42 hinterlegten Daten sowie den Sensordaten der Sensoren 18 zweite Regelstellgrößenanteile 44 für jede einzelne der Windenergieanlagen 100 bestimmt. Diese zweiten Regelstellgrößenanteile 44 werden ebenfalls der Kommunikationsschnittstelle 28 zugeführt, die zweite Datenpakete erstellt, wobei jedes dieser zweiten Datenpakete einen zweiten Regelstellgrößenanteil 44 und die Adresse der spezifischen Windenergieanlage 100 enthält, für die der zweite Regelstellgrößenanteil 44 unter Beachtung der im Speicher 42 hinterlegten spezifischen Daten dieser Windenergieanlage 100, ermittelt wurde. Diese zweiten Datenpakete werden ebenfalls über den Datenausgang 30 auf das Bussystem 12 ausgegeben. Jede der Windenergieanlagen 100 empfängt dann entsprechend das an die jeweilige Windenergieanlage 100 adressierte Datenpaket. Hieraus wird dann der zweite Regelstellgrößenanteil 44 entnommen und ebenfalls im Speicher 32 der jeweiligen Windenergieanlage 100 hinterlegt.

Somit ist es möglich, einen ersten Regelstellgrößenanteil 26 sowie einen individuellen zweiten Regelstellgrößenanteil 44 für jede Windenergieanlage 100 bereitzustellen und individuell an jede der Windenergieanlagen 100 zu übertragen. Der individuelle Regelstellgrößenanteil 44, nämlich der zweite Regelstellgrößenanteil 44, wird hierbei mit einer vergleichsweise geringen Frequenz aktualisiert, so dass von der Kommunikationsschnittstelle 28 Datenpakete mit einem ersten Regelstellgrößenanteil 26 mit einer vergleichsweise größeren Wiederholrate oder Frequenz ausgegeben wird.

Erste Datenpakete mit dem ersten Regelstellgrößenanteil 26 werden dementsprechend beispielsweise immer nach Ablauf eines Zeitraums, der beispielsweise unterhalb einem Zeitbereich von 10 Sekunden, zum Beispiel einem Zeitbereich von einer Sekunde, liegt, ausgesendet. Zweite Datenpakete mit zweiten Regelstellgrößenanteilen 44 werden beispielsweise nur im Falle ausgesendet, in dem beispielsweise mit dem Sensor 18 eine sich ändernde Windrichtung detektiert wird und daher aufgrund der Positionen einzelner Windenergieanlagen 100 innerhalb des Verbunds des Windparks 112 von den allgemein gültigen Stellgrößen abweichende Stellgrößen für die jeweilige Windenergieanlage 100 nötig sind.

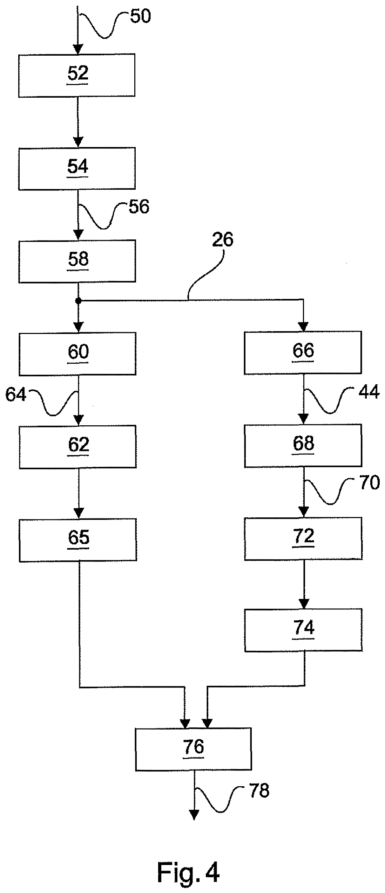

Fig. 4 zeigt den prinzipiellen Ablauf des erfindungsgemäßen Verfahrens gemäß einem Ausführungsbeispiel. Zunächst wird eine Führungsgröße 50 von einem Netzbetreiber an den Windparkregler 10 übertragen und im Schritt 52 empfangen. Im Schritt 54 wird die empfangene Führungsgröße 50 mit einem Ist-Wert, der am Einspeisepunkt 118 gemessen wurde und dem Windparkregler 10 ebenfalls zugeführt wurde, verglichen. Die Differenz 56 wird dann einem Regler 21 des Windparkreglers 10 zugeführt und im Regler 21 ein erster Regelstellgrößenanteil 26 in einem Schritt 58 ermittelt. Der erste Regelstellgrößenanteil 26 wird dann einer Kommunikationsschnittstelle 28 zugeführt, die in einem Sendeschritt 60 ein erstes Datenpaket 64 aussendet. Das erste Datenpaket 64 wird dann im Schritt 62 von einer Windenergieanlage 100 empfangen und in einem Speicherschritt 65 in einem Speicher 32 der Windenergieanlage 100 gespeichert.

Gleichzeitig wird der erste Regelstellgrößenanteil 26, nachdem dieser vom Regler 21 im Schritt 58 ermittelt wurde, einer Ermittlungseinheit 40 zugeführt und in der Ermittlungseinheit 40 ein zweiter Regelstellgrößenanteil 44 ermittelt 66. Der zweite Regelstellgrößenanteil 44 wird dann ebenfalls einer Kommunikationsschnittstelle 28 zugeführt und in einem Schritt 68 in einem zweiten Datenpaket 70 ausgesendet.

In einem Schritt 72 wird das zweite Datenpaket 70 von einer Windenergieanlage 100 empfangen und der zweite Regelstellgrößenanteil 44 des zweiten Datenpakets 70 in einem Schritt 74 in einem Speicher 42 gespeichert. Nachdem der erste Regelstellgrößenanteil 26 und der zweite Regelstellgrößenanteil 44 von der Windenergieanlage 100 in den Schritten 65 und 74 gespeichert wurde, wird nun in einem Schritt 76 eine Regelstellgröße 78 von einer Windenergieanlagenrechnereinheit 34 bestimmt und einem Regler 38 der Windenenergieanlage 100 zugeführt.

### Bezuqszeichenliste

- 100: Windenergieanlage/Windenergieanlagen/Einheit
- 102: Turm
- 104: Gondel
- 106: aerodynamischer Rotor
- 108: drei Rotorblätter
- 110: Spinner
- 112: Windpark
- 114: Parknetz
- 116: Transformator
- 118: Einspeisepunkt
- 120: Versorgungsnetz
- 10: Windparkregler/Regler
- 12: Bussystem
- 14: Leitzentrale
- 15,20: Dateneingang
- 16: Verbindung
- 17: Sensordateneingang
- 18: Sensor/Umweltsensor
- 19: Rückführung
- 21: Regler
- 22: Messstelle
- 24: Regelabweichung
- 26: Erster Regelstellgrößenanteil
- 27: Dateneingang einer Einheit
- 28: Kommunikationsschnittstelle
- 30: Datenausgang
- 32: Speicher der Einheit
- 34: Windenergieanlagenrechnereinheit/Einheitenrechnereinheit
- 38: Windenergieanlagenregler
- 40: Ermittlungseinheit
- 41: Reglerrecheneinheit
- 42: Speicher eines Windparkreglers
- 44: Zweiter Regelstellgrößenanteil
- 50: Führungsgröße
- 52,54,58, 62, 72,74,76: Schritt
- 56: Differenz
- 60: Sendeschritt
- 64: Erstes Datenpaket
- 65: Speicherschritt
- 68: ausgesendet/Aussendung
- 70: Zweites Datenpaket
- 78: Regelstellgröße

## Patentansprüche

1. Verfahren zum Übertragen von Regelstellgrößen (36, 78) von einem Regler (10), zum Beispiel einem Windparkregler (10) eines Windparks (112), an Einheiten (100), insbesondere mindestens eine Windenergieanlage (100) und/oder mindestens einen Energiespeicher (32), des Windparks (112), umfassend die Schritte:
- Ermitteln (58) eines ersten Regelstellgrößenanteils (26),
- Ermitteln (66) eines zweiten Regelstellgrößenanteils (44) mit dem Regler (10),
- Ausgeben (60) des ersten Regelstellgrößenanteils (26) in einem ersten Datenpaket (64),
- Ausgeben (68) des zweiten Regelstellgrößenanteils (44) in einem zweiten Datenpaket (70),
- Empfangen (62) des ersten Datenpakets (64) mit dem ersten Regelstellgrößenanteil (26) von einer ersten Einheit (100),
- Empfangen (72) des zweiten Datenpakets (70) mit dem zweiten Regelstellgrößenanteil (44) von einer ersten Einheit (100) und
- Bilden (76) einer Regelstellgröße (78) aus dem ersten Regelstellgrößenanteil (26) und dem zweiten Regelstellgrößenanteil (44) in der ersten Einheit (100),
- wobei das erste Datenpaket (64) eine Empfängeradresse aufweist, die der ersten Einheit (100) und mindestens einer weiteren Einheit (100) zugewiesen ist und wobei mit dem ersten Datenpaket ein Regelstellgrößenanteil ausgesendet wird, der allgemein für mehrere oder alle Einheiten bei der Regelung zum Zeitpunkt der Aussendung gültig ist, und das zweite Datenpaket (70) eine Empfängeradresse aufweist, die mindestens der ersten Einheit (100) zugewiesen ist, und wobei das zweite Datenpaket einen Regelstellgrößenanteil enthält, der individuell für eine spezielle Einheit festgelegt ist und demnach auch nur von der speziellen Einheit empfangen wird, wobei erste Datenpakete (64) mit dem ersten Regelstellgrößenanteil (26) häufiger als zweite Datenpakete (70) mit dem zweiten Regelstellgrößenanteil (44) versendet werden, sodass weiterhin eine Aktualisierungsrate des Regelstellgrößenanteils der einzelnen Einheiten mit einer gewünschten hohen Frequenz erfolgen kann.

2. Verfahren nach Anspruch 1, wobei der erste Regelstellgrößenanteil (26) und der zweite Regelstellgrößenanteil (44) in einem Speicher (32) der ersten Einheit (100) gespeichert (65, 74) werden,
- nach dem Empfangen (62) eines weiteren Datenpakets (64) mit einem weiteren ersten Regelstellgrößenanteil (26), die Regelstellgröße (78) aus dem weiteren ersten Regelstellgrößenanteil (26) und dem gespeicherten zweiten Regelstellgrößenanteil (44) gebildet wird und
- nach dem Empfangen (72) eines weiteren Datenpakets (70) mit einem weiteren zweiten Regelstellgrößenanteil (44) die Regelstellgröße (78) aus dem gespeicherten ersten Regelstellgrößenanteil (26) und dem weiteren zweiten Regelstellgrößenanteil (44) bestimmt wird und
- der weitere erste Regelstellgrößenanteil (26) oder der weitere Regestellgrößenanteil (44) im Speicher (32) gespeichert wird.

3. Verfahren nach Anspruch 1 oder 2, wobei das erste Datenpaket (64) zyklisch oder ereignisbasiert und das zweite Datenpaket (70) zyklisch oder ereignisbasiert ausgesendet wird (60, 68).

4. Verfahren nach einem der vorhergehenden Ansprüche, wobei der erste Regelstellgrößenanteil (26) einem absoluten oder prozentualen Wert und der zweite Regelstellgrößenanteil (44) einem zweiten absoluten oder prozentualen Wert entspricht und die Regelstellgröße (78) in der ersten Einheit (100) durch Aufaddieren des ersten Regelstellgrößenanteils (26) und dem zweiten Regelstellgrößenanteil (44) bestimmt wird oder
- der erste Regelstellgrößenanteil (26) einem absoluten oder prozentualen Wert und der zweite Regelstellgrößenanteil (44) einem Faktor entspricht und die Regelstellgröße (78) durch Multiplizieren des ersten Regelstellgrößenanteils (26) mit dem zweiten Regelstellgrößenanteil (44) bestimmt wird.

5. Verfahren nach einem der vorhergehenden Ansprüche, wobei die Regelstellgröße (78) Werte zwischen einem minimalen und einem maximalen Wert annehmen kann und der erste Regelstellgrößenanteil (26) einen Wert von oder zwischen 0 und 100 % der Differenz zwischen dem minimalen und maximalen Wert aufweist und der zweite Regelstellgrößenanteil (44) einen Wert von oder zwischen -100 % und 100% der Differenz zwischen dem minimalen und maximalen Wert aufweist.

6. Verfahren nach einem der vorhergehenden Ansprüche, wobei der erste Regelstellgrößenanteil (26) in Abhängigkeit von globalen, vorzugsweise windparkspezifischen, Parametern für mehrere oder alle Einheiten (100) und der zweite Regelstellgrößenanteil (44) in Abhängigkeit von einheitenspezifischen Parametern ermittelt wird.

7. Verfahren nach einem der vorhergehenden Ansprüche, wobei der erste Regelstellgrößenanteil (26) in Abhängigkeit einer Führungsgröße (50) für den Regler (10), die vom Windparkbetreiber und/oder Netzbetreiber vorgegeben wird, mit dem Regler (10) bestimmt wird.

8. Verfahren nach einem der vorhergehenden Ansprüche, wobei der zweite Regelstel-Igrößenanteil (44) für eine bestimmte Einheit (100) in Abhängigkeit einer Führungsgröße (50) bestimmt wird, die mit für die Einheit (100) spezifischen Parametern, insbesondere der Position der Einheit (100) innerhalb eines Windparks (112) und/oder der Länge der elektrischen Leitung von der Einheit (100) zu einem Netzeinspeiseknoten (118) des Windparks (112), bestimmt wird.

9. Verfahren nach einem der vorhergehenden Ansprüche, wobei die Regelstellgröße (78) eine Leistungsstellgröße, nämlich eine Wirkleistungsstellgröße oder eine Blindleistungsstellgröße, eine Spannungsstellgröße oder eine Frequenzstellgröße ist.

10. Regler (10), insbesondere für einen Windpark (112), der eingerichtet ist, die Schritte eines Verfahrens nach einem der Ansprüche 1 bis 9 auszuführen mit:
- Ermitteln (58) eines ersten Regelstellgrößenanteils (26),
- Ermitteln (66) eines zweiten Regelstellgrößenanteils (44) mit dem Regler (10),
- Ausgeben (60) des ersten Regelstellgrößenanteils (26) in einem ersten Datenpaket (64),
- Ausgeben (68) des zweiten Regelstellgrößenanteils (44) in einem zweiten Datenpaket (70),
wobei der Regler umfasst:
- eine Reglerrecheneinheit (41) zum Ermitteln eines ersten Regelstellgrößenanteils (26) und eines zweiten Regelstellgrößenanteils (44),
- mindestens einen Datenausgang (30) zum Anschließen einer Datenverbindung (12), insbesondere einer Busverbindung, zu Einheiten (100), insbesondere Windenergieanlagen (100) oder Energiespeicher, und zum Übertragen des ersten Regelstellgrößenanteils (26) in einem ersten Datenpaket (64) und des zweiten Regelstellgrößenanteils (44) in einem zweiten Datenpaket (70), wobei erste Datenpakete (64) mit dem ersten Regelstellgrößenanteil (26) häufiger als zweite Datenpakete (70) mit dem zweiten Regelstellgrößenanteil (44) versendet werden. , so dass weiterhin eine Aktualisierungsrate des Regelstellgrößenanteils der einzelnen Einheiten mit einer gewünschten hohen Frequenz erfolgen kann.

11. Regler nach Anspruch 10, wobei der Regler mindestens einen Dateneingang (15) zum Empfangen einer Führungsgröße (50) von einem Netzbetreiber und/oder einem Windparkbetreiber aufweist, und/oder
wobei der Regler (10) einen Speicher (42) zum Speichern für einheitenspezifische Parameter aufweist.

12. Regler nach Anspruch 10 oder 11, wobei der Regler (10) mindestens einen Dateneingang (17) zum Anschließen mindestens eines Sensors (18), insbesondere eines Umweltsensors zum Bestimmen beispielsweise der Windrichtung und der Windgeschwindigkeit, umfasst.

13. Einheit (100), insbesondere für einen Windpark (112), die eingerichtet ist, die Schritte eines Verfahrens nach einem der Ansprüche 1 bis 9 auszuführen mit:
- Empfangen (62) des ersten Datenpakets (64) mit dem ersten Regelstellgrößenanteil (26),
- Empfangen (72) des zweiten Datenpakets (70) mit dem zweiten Regelstellgrößenanteil (44)
- Bilden (76) einer Regelstellgröße (78) aus dem ersten Regelstellgrößenanteil (26) und dem zweiten Regelstellgrößenanteil (44),
und die Einheit umfasst:
- mindestens einen Dateneingang (27) zum Empfangen eines ersten Datenpakets (64) mit einem ersten Regelstellgrößenanteil (26) und zum Empfangen eines zweiten Datenpakets (70) mit einem zweiten Regelstellgrößenanteil (44), wobei erste Datenpakete (64) mit dem ersten Regelstellgrößenanteil (26) häufiger als zweite Datenpakete (70) mit dem zweiten Regelstellgrößenanteil (44) versendet werden so dass weiterhin eine Aktualisierungsrate des Regelstellgrößenanteils der einzelnen Einheiten mit einer gewünschten hohen Frequenz erfolgen kann, und
- eine Einheitenrechnereinheit (34) zum Bilden einer Regelstellgröße (78) aus dem ersten Regelstellgrößenanteil (26) und dem zweiten Regelstellgrößenanteil (44) aufweist.

14. Einheit nach Anspruch 13, wobei die Einheitenrechnereinheit (34) eingerichtet ist, den ersten Regelstellgrößenanteil (26) und den zweiten Regelstellgrößenanteil (44) zu addieren oder miteinander zu multiplizieren und die Einheit (100) einen Speicher (32) zum Speichern des ersten Regelstellgrößenanteils (26) und des zweiten Regelstellgrößenanteils (44) aufweist.

15. Windpark umfassend einen Regler, nämlich einen Windparkregler, nach einem der Ansprüche 10 bis 12 und mehrere Einheiten, nämlich Windenergieanlagen, nach Anspruch 13 oder 14.

## Claims

1. A method for transmitting controlling control variables (36, 78) from a controller (10), for example a windfarm controller (10) of a windfarm (112), to units (100), in particular at least one wind power installation (100) and/or at least one energy store (32), of the windfarm (112), comprising the following steps:
- determining (58) a first controlling control variable component (26),
- determining (66) a second controlling control variable component (44) with the controller (10),
- outputting (60) the first controlling control variable component (26) in a first data packet (64),
- outputting (68) the second controlling control variable component (44) in a second data packet (70),
- receiving (62) the first data packet (64) with the first controlling control variable component (26) from a first unit (100),
- receiving (72) the second data packet (70) with the second controlling control variable component (44) from a first unit (100), and
- forming (76) a controlling control variable (78) from the first controlling control variable component (26) and the second controlling control variable component (44) in the first unit (100),
- wherein the first data packet (64) has a receiver address which is assigned to the first unit (100) and to at least one further unit (100) and wherein a controlling control variable component is transmitted with the first data packet, which is generally valid at the time of transmission for a plurality of or all units during control, and the second data packet (70) has a receiver address which is assigned to at least the first unit (100), and wherein the second data packet contains a controlling control variable component, which is defined individually for a specific unit and accordingly is also received by the specific unit only, wherein first data packets (64) with the first controlling control variable component (26) are dispatched more frequently than second data packets (70) with the second controlling control variable component (44), so that an update rate of the controlling control variable component of the individual units can continue to be implemented at a desired high frequency.

2. The method as claimed in claim 1, wherein the first controlling control variable component (26) and the second controlling control variable component (44) are stored (65, 74) in a memory (32) of the first unit (100),
- after the reception (62) of a further data packet (64) with a further first controlling control variable component (26), the controlling control variable (78) is formed from the further first controlling control variable component (26) and the stored second controlling control variable component (44), and
- after the reception (72) of a further data packet (70) with a further second controlling control variable component (44), the controlling control variable (78) is defined from the stored first controlling control variable component (26) and the further second controlling control variable component (44), and
- the further first controlling control variable component (26) or the further controlling control variable component (44) is stored in the memory (32).

3. The method as claimed in claim 1 or 2, wherein the first data packet (64) and the second data packet (70) are transmitted (60, 68) cyclically or in an event-based manner.

4. The method as claimed in one of the preceding claims, wherein the first controlling control variable component (26) corresponds to an absolute or percentage value and the second controlling control variable component (44) corresponds to a second absolute or percentage value and the controlling control variable (78) is defined in the first unit (100) by adding the first controlling control variable component (26) and the second controlling control variable component (44), or
- the first controlling control variable component (26) corresponds to an absolute or percentage value and the second controlling control variable component (44) corresponds to a factor and the controlling control variable (78) is defined by multiplying the first controlling control variable component (26) by the second controlling control variable component (44).

5. The method as claimed in one of the preceding claims, wherein the controlling control variable (78) can assume values between a minimum and a maximum value and the first controlling control variable component (26) has a value of or between 0 and 100 % of the difference between the minimum and maximum value and the second controlling control variable component (44) has a value of or between -100% and 100% of the difference between the minimum and maximum value.

6. The method as claimed in one of the preceding claims, wherein the first controlling control variable component (26) is determined depending on global, preferably windfarm-specific, parameters for a plurality of or all units (100) and the second controlling control variable component (44) is determined depending on unit-specific parameters.

7. The method as claimed in one of the preceding claims, wherein the first controlling control variable component (26) is defined with the controller (10) depending on a reference variable (50) for the controller (10) which is specified by the windfarm operator and/or network operator.

8. The method as claimed in one of the preceding claims, wherein the second controlling control variable component (44) is defined for a specific unit (100) depending on a reference variable (50) which is defined with parameters specific to the unit (100), in particular the position of the unit (100) within a windfarm (112) and/orthe length of the electrical line from the unit (100) to a network feed-in node (118) of the windfarm (112).

9. The method as claimed in one of the preceding claims, wherein the controlling control variable (78) is a power control variable, i.e. an active power control variable or a reactive power control variable, a voltage control variable or a frequency control variable.

10. A controller (10), in particular for a windfarm (112), which is arranged to perform the steps of a method as claimed in one of claims 1 to 9, comprising:
- determining (58) a first controlling control variable component (26),
- determining (66) a second controlling control variable component (44) with the controller (10),
- outputting (60) the first controlling control variable component (26) in a first data packet (64),
- outputting (68) the second controlling control variable component (44) in a second data packet (70),
wherein the controller comprises:
- a controller computing unit (41) to determine a first controlling control variable component (26) and a second controlling control variable component (44),
- at least one data output (30) to connect a data connection (12), in particular a bus connection, to units (100), in particular wind power installations (100) or energy stores, and to transmit the first controlling control variable component (26) in a first data packet (64) and the second controlling control variable component (44) in a second data packet (70), wherein first data packets (64) with the first controlling control variable component (26) are dispatched more frequently than second data packets (70) with the second controlling control variable component (44), so that an update rate of the controlling control variable component of the individual units can continue to be implemented at a desired high frequency.

11. The controller as claimed in claim 10, wherein the controller has at least one data input (15) to receive a reference variable (50) from a network operator and/or a windfarm operator, and/or
wherein the controller (10) has a memory (42) to store the unit-specific parameters.

12. The controller as claimed in one of claims 10 to 11, wherein the controller (10) comprises at least one data input (17) to connect at least one sensor (18), in particular an environment sensor for defining, for example, the wind direction and wind speed.

13. A unit (100), in particular for a windfarm (112), which is arranged to perform the following steps of a method as claimed in one of claims 1 to 9, comprising:
- receiving (62) the first data packet (64) with the first controlling control variable component (26),
- receiving (72) the second data packet (70) with the second controlling control variable component (44), and
- forming (76) a controlling control variable (78) from the first controlling control variable component (26) and the second controlling control variable component (44),
and the units comprises
- at least one data input (27) to receive a first data packet (64) with a first controlling control variable component (26) and to receive a second data packet (70) with a second controlling control variable component (44), wherein first data packets (64) with the first controlling control variable component (26) are dispatched more frequently than second data packets (70) with the second controlling control variable component (44), so that an update rate of the controlling control variable component of the individual units can continue to be implemented at a desired high frequency, and
- a unit computer unit (34) to form a controlling control variable (78) from the first controlling control variable component (26) and the second controlling control variable component (44).

14. The unit as claimed in claim 13, wherein the unit computer unit (34) is configured to add or multiply by one another the first controlling control variable component (26) and the second controlling control variable component (44), and the unit (100) has a memory (32) to store the first controlling control variable component (26) and the second controlling control variable component (44).

15. A windfarm comprising a controller, i.e. a windfarm controller, as claimed in one of claims 10 to 12, and a plurality of units, i.e. wind power installations, as claimed in claim 13 or 14.

## Revendications

1. Procédé de transmission de grandeurs de réglage (36, 78) d'un dispositif de commande (10), par exemple un dispositif de commande de parc éolien (10) d'un parc éolien (112), à des unités (100), en particulier au moins une éolienne (100) et/ou au moins un accumulateur d'énergie (32), du parc éolien (112), comprenant les étapes :
- le calcul (58) d'une première part de grandeur de réglage (26),
- le calcul (66) d'une seconde part de grandeur de réglage (44) avec le dispositif de commande (10),
- la sortie (60) de la première part de grandeur de réglage (26) dans un premier paquet de données (64),
- la sortie (68) de la seconde part de grandeur de réglage (44) dans un second paquet de données (70),
- la réception (62) du premier paquet de données (64) avec la première part de grandeur de réglage (26) par une première unité (100),
- la réception (72) du second paquet de données (70) avec la seconde part de grandeur de réglage (44) par une première unité (100) et
- la formation (76) d'une grandeur de réglage (78) à partir de la première part de grandeur de réglage (26) et de la seconde part de grandeur de réglage (44) dans la première unité (100),
- dans lequel le premier paquet de données (64) présente une adresse de récepteur qui est affectée à la première unité (100) et au moins une autre unité (100) et dans lequel une part de grandeur de réglage est émise avec le premier paquet de données, laquelle est valide en général pour plusieurs ou toutes les unités lors de la régulation au moment de l'émission, et le second paquet de données (70) présente une adresse de récepteur qui est affectée au moins à la première unité (100), et dans lequel le second paquet de données contient une part de grandeur de réglage qui est fixée individuellement pour une unité spéciale et ainsi est aussi reçu seulement par l'unité spéciale, dans lequel des premiers paquets de données (64) avec la première part de grandeur de réglage (26) sont envoyés plus souvent que des seconds paquets de données (70) avec la seconde part de grandeur de réglage (44) de sorte qu'en outre un taux d'actualisation de la part de grandeur de réglage des unités individuelles puisse être effectué avec une fréquence élevée souhaitée.

2. Procédé selon la revendication 1, dans lequel la première part de grandeur de réglage (26) et la seconde part de grandeur de réglage (44) sont enregistrées dans une mémoire (32) de la première unité (100),
- après la réception (62) d'un autre paquet de données (64) avec une autre première part de grandeur de réglage (26), la grandeur de réglage (78) est formée à partir de l'autre première part de grandeur de réglage (26) et de la seconde part de grandeur de réglage (44) enregistrée et
- après la réception (72) d'un autre paquet de données (70) avec une autre seconde part de grandeur de réglage (44) la grandeur de réglage (78) est déterminée à partir de la première part de grandeur de réglage (26) enregistrée et de l'autre seconde part de grandeur de réglage (44) et
- l'autre première part de grandeur de réglage (26) ou l'autre part de grandeur de réglage (44) est enregistrée dans la mémoire (32).

3. Procédé selon la revendication 1 ou 2, dans lequel le premier paquet de données (64) est envoyé de manière cyclique ou basée sur les événements et le second paquet de données (70) est envoyé de manière cyclique ou basée sur les événements (60, 68).

4. Procédé selon l'une des revendications précédentes, dans lequel la première part de grandeur de régulation (26) correspond à une valeur absolue ou en pourcentage et la seconde part de grandeur de réglage (44) correspond à une seconde valeur absolue ou en pourcentage et la grandeur de réglage (78) dans la première unité (100) est déterminée par addition de la première part de grandeur de réglage (26) et de la seconde part de grandeur de réglage (44) ou
- la première part de grandeur de réglage (26) correspond à une valeur absolue ou en pourcentage et la seconde part de grandeur de réglage (44) correspond à un facteur et la grandeur de réglage (78) est déterminée par la multiplication de la première part de grandeur de réglage (26) avec la seconde part de grandeur de réglage (44).

5. Procédé selon l'une des revendications précédentes, dans lequel la grandeur de réglage (78) peut accepter des valeurs entre une valeur minimale et une valeur maximale et la première part de grandeur de réglage (26) présente une valeur de ou entre 0 et 100 % de la différence entre la valeur minimale et la valeur maximale et la seconde part de grandeur de réglage (44) présente une valeur de ou entre -100 % et 100 % de la différence entre la valeur minimale et la valeur maximale.

6. Procédé selon l'une des revendications précédentes, dans lequel la première part de grandeur de réglage (26) est calculée en fonction de paramètres globaux, de préférence spécifiques au parc éolien pour plusieurs ou toutes les unités (100) et la seconde part de grandeur de réglage (44) est calculée en fonction de paramètres spécifiques aux unités.

7. Procédé selon l'une des revendications précédentes, dans lequel la première part de grandeur de réglage (26) est déterminée en fonction d'une grandeur de guidage (50) pour le dispositif de commande (10) qui est prédéfinie par l'opérateur de parc éolien et/ou l'exploitant de réseau, avec le dispositif de commande (10).

8. Procédé selon l'une des revendications précédentes, dans lequel la seconde part de grandeur de réglage (44) est déterminée pour une unité déterminée (100) en fonction d'une grandeur de guidage (50) qui est déterminée avec des paramètres spécifiques pour l'unité (100), en particulier la position de l'unité (100) à l'intérieur d'un parc éolien (112) et/ou la longueur du câble électrique de l'unité (100) à un nœud d'injection de réseau (118) du parc éolien (112).

9. Procédé selon l'une des revendications précédentes, dans lequel la grandeur de réglage (78) est une grandeur de réglage de puissance, à savoir une grandeur de réglage de puissance active ou une grandeur de réglage de puissance réactive, une grandeur de réglage de tension ou une grandeur de réglage de fréquence.

10. Dispositif de commande (10), en particulier pour un parc éolien (112) qui est conçu afin de réaliser les étapes d'un procédé selon l'une des revendications 1 à 9 avec :
- le calcul (58) d'une première part de grandeur de réglage (26),
- le calcul (66) d'une seconde part de grandeur de réglage (44) avec le dispositif de commande (10),
- la sortie (60) de la première part de grandeur de réglage (26) dans un premier paquet de données (64),
- la sortie (68) de la seconde part de grandeur de réglage (44) dans un second paquet de données (70), dans lequel le dispositif de commande comporte :
- une unité de calcul de dispositif de commande (41) pour le calcul d'une première part de grandeur de réglage (26) et d'une seconde part de grandeur de réglage (44),
- au moins une sortie de données (30) pour le raccordement d'une liaison de données (12), en particulier une liaison bus, aux unités (100), en particulier des éoliennes (100) ou accumulateur d'énergie, et pour la transmission de la première part de grandeur de réglage (26) dans un premier paquet de données (64) et de la seconde part de grandeur de réglage (44) dans un second paquet de données (70), dans lequel des premiers paquets de donnés (64) sont envoyés plus souvent que des seconds paquets de données (70) avec la seconde part de grandeur de réglage (44) de sorte qu'en outre un taux d'actualisation de la part de grandeur de réglage des unités individuelles puisse être effectué avec une fréquence élevée souhaitée.

11. Dispositif de commande selon la revendication 10, dans lequel le dispositif de commande présente au moins une entrée de données (15) pour la réception d'une grandeur de guidage (50) par un exploitant de réseau et/ou un opérateur de parc éolien, et/ou
dans lequel le dispositif de commande (10) présente une mémoire (42) pour l'enregistrement pour des paramètres spécifiques aux unités.

12. Dispositif de commande selon la revendication 10 ou 11, dans lequel le dispositif de commande (10) comporte au moins une entrée de données (17) pour le raccordement au moins d'un capteur (18), en particulier d'un capteur environnemental pour la détermination par exemple du sens du vent et de la vitesse du vent.

13. Unité (100), en particulier pour un parc éolien (112) qui est conçue afin de réaliser les étapes d'un procédé selon l'une des revendications 1 à 9 avec :
- la réception (62) du premier paquet de données (64) avec la première part de grandeur de réglage (26),
- la réception (72) du second paquet de données (70) avec la seconde part de grandeur de réglage (44),
- la formation (76) d'une grandeur de réglage (78) à partir de la première part de grandeur de réglage (26) et de la seconde part de grandeur de réglage (44),
et l'unité comporte :
- au moins une entrée de données (27) pour la réception d'un premier paquet de données (64) avec une première part de grandeur de réglage (26) et pour la réception d'un second paquet de données (70) avec une seconde part de grandeur de réglage (44), dans laquelle des premiers paquets de données (64) avec la première part de grandeur de réglage (26) sont envoyés plus souvent que des seconds paquets de données (70) avec la seconde part de grandeur de réglage (44) de sorte qu'en outre un taux d'actualisation de la part de grandeur de réglage des unités individuelles puisse être effectué avec une fréquence élevée souhaitée et
- une unité de calcul d'unité (34) pour la formation d'une grandeur de réglage (78) à partir de la première part de grandeur de réglage (26) et de la seconde part de grandeur de réglage (44).

14. Unité selon la revendication 13, dans laquelle l'unité de calcul d'unités (34) est conçue afin d'ajouter la première part de grandeur de réglage (26) et la seconde part de grandeur de réglage (44) ou de les multiplier l'une avec l'autre et l'unité (100) présente une mémoire (32) pour l'enregistrement de la première part de grandeur de réglage (26) et de la seconde part de grandeur de réglage (44).

15. Parc éolien comprenant un dispositif de commande, à savoir un dispositif de commande de parc éolien, selon l'une des revendications 10 à 12 et plusieurs unités, à savoir des éoliennes, selon la revendication 13 ou 14.
